# EUROPEAN PATENT APPLICATION

(11) **EP 1 612 198 A1**
(43) Date of publication of application: **04.01.2006**
(21) Application number: 04721641.1
(22) Date of filing: 18.03.2004
(51) Int. Cl.: C04B 38/00, B01J 2/10, F16D 69/02, C22C 1/10

(54) **CERAMICS HOLLOW PARTICLES, COMPOSITE MATERIAL CONTAINING CERAMICS HOLLOW PARTICLES AND SLIDING MEMBER**

(30) Priority: 20.03.2003 JP 2003077971; 20.03.2003 JP 2003077972
(71) Applicant: YAZAKI CORPORATION, Minato-ku Tokyo 108-8333 (JP)
(72) Inventor: KATO, Takayuki, Susono-shi, Shizuoka 410-1194 (JP); EGASHIRA, Makoto, Nagasaki-shi, Nagasaki 852-8521 (JP); SHIMIZU, Yasuhiro, Nagasaki-shi, Nagasaki 852-8521 (JP); HYODO, Takeo, Nagasaki-shi, Nagasaki 852-8521 (JP)
(74) Representative: Grünecker, Kinkeldey, Stockmair & Schwanhäusser Anwaltssozietät
(86) International application number: PCT/JP2004/003663
(87) International publication number: WO 2004/083150

(57) **Abstract**

The present invention provides (1) hollow ceramics particles having a hollow structure formed by a porous shell layer comprising ceramics powders bonded to each other and having an average particle diameter of from 10 to 100 µm and a breaking strength of 5 x 10⁴ MPa or more, (2) a hollow ceramics particles-containing composite material comprising hollow ceramics particles dispersed in a matrix which hollow ceramics particles formed by a porous shell layer comprising ceramics powders bonded to each other, wherein the aforementioned hollow ceramics particles are hollow particles obtained by sintering a precursor comprising the aforementioned ceramics powder covered by a resin powder in such an arrangement that a part of the aforementioned ceramics powder is embedded in the resin powder, and (3) a sliding member made of the aforementioned a hollow ceramics particles-containing composite material.

## Description

### <Technical Field>

The present invention relates to hollow ceramics particles having a hollow structure formed by a porous shell layer comprising ceramics powders bonded to each other, a hollow ceramics particles-containing composite material comprising the aforementioned hollow ceramics particles dispersed in a matrix and a sliding member formed by the aforementioned hollow ceramics particles-containing composite material.

### <Background Art>

Composite materials having ceramics particles dispersed in a matrix such as metal have heretofore been widely used for the purpose of reducing the weight of materials, enhancing the strength of materials or like purposes. Further, at present, for further weight reduction, hollow ceramics particles comprising a substantially spherical porous shell layer having ceramics particles bonded to each other and an empty core are used as well. For example, those having hollow particles of alumina, silica, aluminum nitride, silicon nitride, silicon carbide, etc., dispersed in a metal matrix such as alumina (alloy), optionally with metal fiber, inorganic fiber, etc. are known in JP-A-2002-356754 and JP-A-2001-348633.

These hollow ceramics particles are normally obtained by forming a precursor comprising a large diameter resin powder as a core material entirely covered by a powder layer made of a ceramics powder having a smaller diameter than that of resin powder, and then removing the resin powder from the precursor while forming a porous shell layer having ceramics powders bonded to each other. In some detail, hollow ceramics particles are known which are obtained by bringing a water-swollen high hygroscopicity polymer powder into contact with a ceramics powder to form a powder layer of ceramics powder on the entire surface of the high hygroscopicity polymer powder and prepare a precursor, and then subjecting the precursor to high temperature drying or calcination to remove the high hygroscopicity polymer and form a hollow structure as described in JP-A- 10-258223.

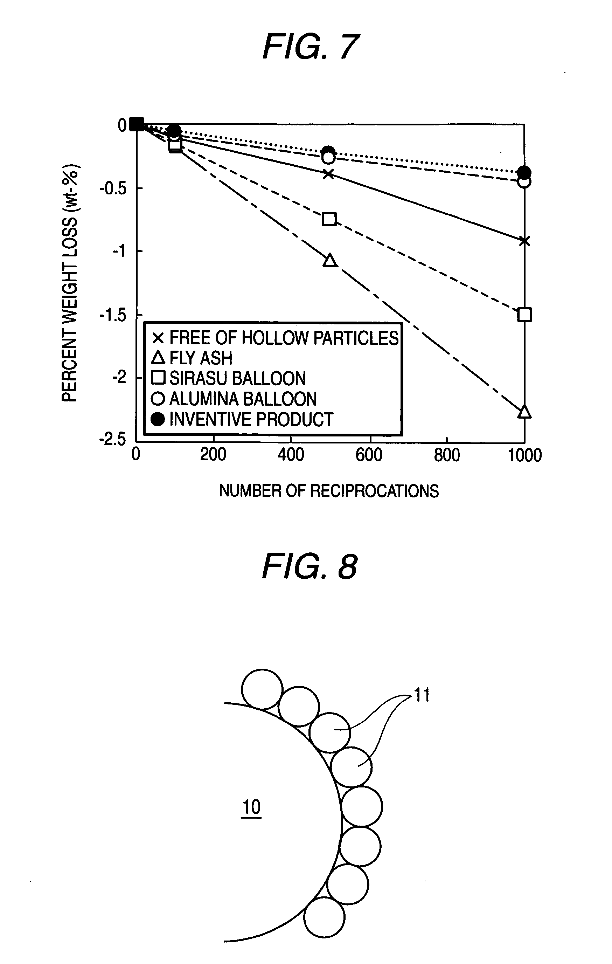

However, the conventional methods of producing hollow ceramics particles are disadvantageous in that a ceramics powder 11 is merely attached to the surface of a resin powder 10 as shown diagrammatically in Fig. 8 and thus can be easily exfoliated off the resin powder 10, making it difficult to uniformly retain the powder layer. Further, the resin powder 10 is thermally expanded or evaporated during the high temperature drying or calcination to apply an outward pressure to the ceramics powder 11, making it more likely that the powder layer can be destroyed. As a result of the exfoliation of the ceramics powder 11 or the destruction of the powder layer, a homogeneous porous shell layer cannot be formed, causing the deterioration of the strength of the hollow ceramics particles. Further, a composite material comprising such hollow ceramics particles incorporated therein can difficultly be mechanically satisfactory.

Further, at present, there has been a growing demand for fine hollow ceramics particles having a particle diameter of 100 µm or less, even 20 µm or less, for the purpose of further reducing weight. To this end, the use of finely divided ceramics powder having a size of few micrometers or on the order of submicrometer is avoidable. However, it is more extremely difficult to maintain a uniform powder layer of such a finely divided ceramics powder and form a good porous shell layer.

For composite materials, too, it has been required to enhance the packing density of hollow ceramics particles. To this end, it is essential to further finely divide the hollow ceramics particles. However, this cannot be fully attained due to the aforementioned problems.

The present invention has been worked out under these circumstances. An object of the present invention is to provide hollow ceramics particles having ceramics powders firmly bonded to each other and a homogeneous and rigid porous shell layer. Another object of the present invention is to provide a high strength hollow ceramics particles-containing composite material containing hollow ceramics particles having a homogeneous and rigid porous shell layer and a sliding member made of the aforementioned hollow ceramics particles-containing composite material which maintains abrasion resistance over an extended period of time.

### <Disclosure of the Invention>

In order to accomplish the aforementioned objects, the present invention provides the followings.
(1) Hollow ceramics particles having a hollow structure formed by a porous shell layer comprising ceramics powders bonded to each other and having an average particle diameter of from 10 to 100 µm and a breaking strength of 5 x 10⁴ MPa or more.
(2) The hollow ceramics particles as described in Clause (1), wherein the average thickness of the aforementioned porous shell layer is from 2 to 66 µm.
(3) The hollow ceramics particles as described in Clause (1) or (2), wherein the aforementioned ceramics powder is a mixed powder composed of powders having different particle diameters and/or kinds.
(4) A hollow ceramics particles-containing composite material comprising hollow ceramics particles dispersed in a matrix which hollow ceramics particles formed by a porous shell layer comprising ceramics powders bonded to each other, wherein the aforementioned hollow ceramics particles are hollow particles obtained by sintering a precursor comprising the aforementioned ceramics powder covered by a resin powder in such an arrangement that a part of the aforementioned ceramics powder is embedded in the resin powder.
(5) The hollow ceramics particles-containing composite material as described in Clause (4), wherein the aforementioned hollow ceramics particles are hollow ceramics particles as described in any one of Clauses (1) to (3).
(6) The hollow ceramics particles-containing composite material as described in Clause (4) or (5), wherein the aforementioned matrix is a metal.
(7) A sliding member made of a hollow ceramics particles-containing composite material as described in any one of Clauses (4) to (6).

### <Brief Description of the Drawings>

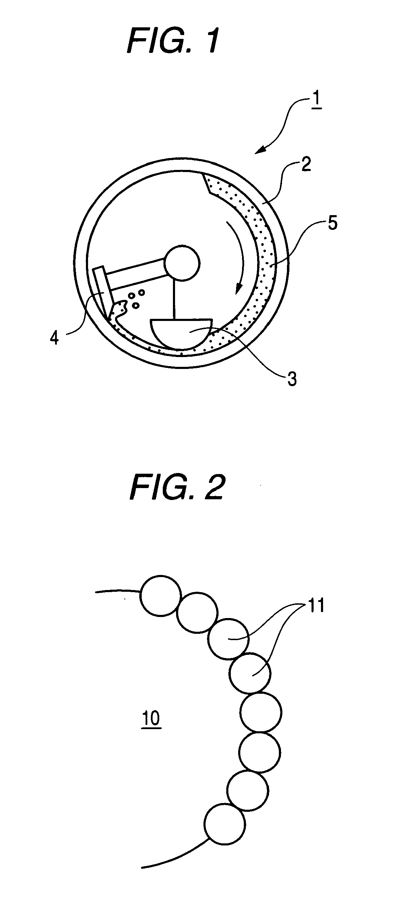

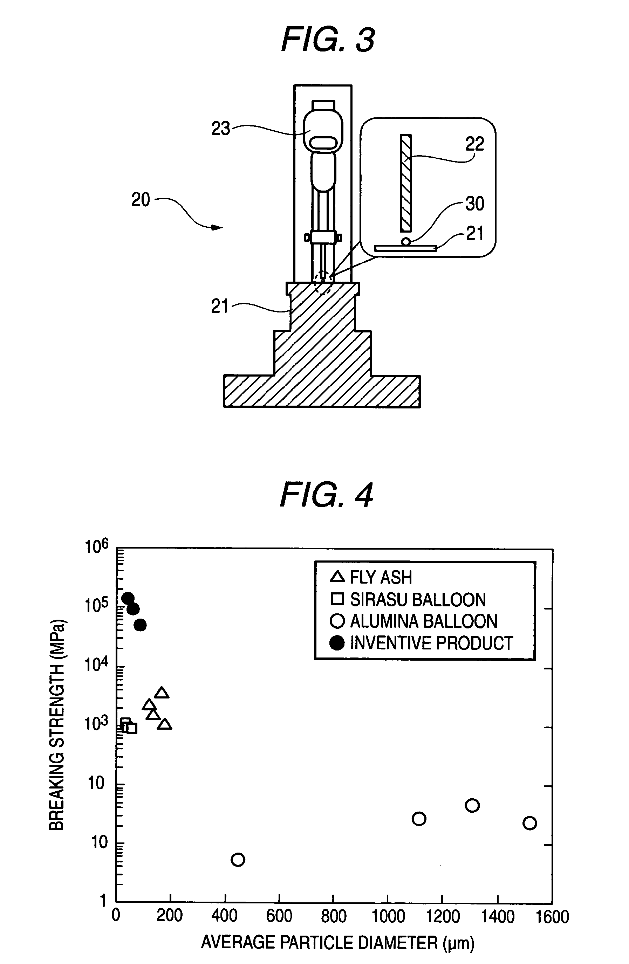

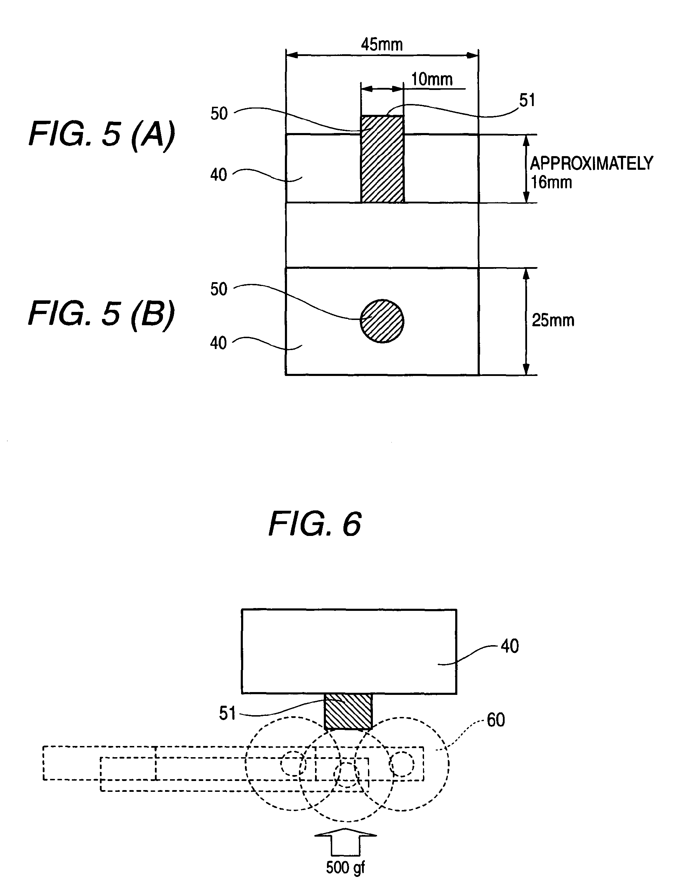

Fig. 1 is a diagrammatic view illustrating the configuration of a producing device suitable for the production of hollow ceramics particles of the present invention, Fig. 2 is a view diagrammatically illustrating a precursor composed of a resin powder and a ceramics powder obtained by the producing device shown in Fig. 1, Fig. 3 is a diagrammatic view illustrating a measuring instrument used to measure the breaking strength of the porous shell layer of hollow particles in examples, Fig. 4 is a graph illustrating the measurements of the breaking strength of various hollow ceramics particles obtained in examples, Fig. 5 consists of a sectional view (A) and a top view (B) illustrating a test specimen used to evaluate abrasion resistance, Fig. 6 is a diagrammatic view illustrating a method of evaluating abrasion resistance in examples, Fig. 7 is a graph illustrating the results of abrasion resistance obtained in examples, and Fig. 8 is a diagram illustrating a method of producing conventional hollow ceramics particles wherein a precursor composed of a resin powder and a ceramics powder is diagrammatically shown.

Further, in these drawings, the reference numeral 1 indicates a pressure bonding/mixing unit, the reference numeral 2 indicates a chamber, the reference numeral 3 indicates an inner, the reference numeral 4 indicates a scraper, the reference numeral 5 indicates a mixed powder, the reference numeral 10 indicates a resin powder, the reference numeral 11 indicates a ceramics powder, the reference numeral 20 indicates a measuring instrument, the reference numeral 21 indicates a pedestal, the reference numeral 22 indicates a hexagonal wrench, the reference numeral 23 indicates a push-pull gauge, the reference numeral 30 indicates hollow particles, the reference numeral 40 indicates an epoxy resin, the reference numeral 50 indicates a hollow alumina particles-containing composite aluminum material, and the reference numeral 60 indicates an abrasion wheel.

### <Best Mode for Carrying Out the Invention>

Preferred embodiments of implementation of the present invention will be described in detail hereinafter.

### (Hollow ceramics particles)

The hollow ceramics particles of the present invention have a hollow structure formed by a porous shell layer comprising ceramics powders bonded to each other and are produced by the following method to form a porous shell layer which is homogenous and thick to have a high strength.

The production is carried out using a pressure bonding/mixing device 1 having a configuration shown in Fig. 1. This pressure bonding/mixing device 1 comprises an inner 3 and a scraper 4 provided on the central axis of a drum-shaped rotatable chamber 2 at a predetermined distance and is arranged such that the chamber 2 is rotated with a mixed powder 5 composed of a ceramic powder and a resin powder received therein. The inner 3 has a substantially semicircular section on the side thereof opposed to the inner wall of the chamber 2 so that the mixed powder 5 can be smoothly taken in and fed and forms a slight clearance with respect to the inner wall of the chamber 2. As a pressure bonding/mixing device 1 having such a configuration, Mechanofusion System (AM-15F, produced by HOSOKAWAMICRON CORPORATION) is known for example.

In the aforementioned pressure bonding/mixing device 1, when the chamber 2 is rotated at a high rate in the direction shown by the arrow with the mixed powder 5 received therein, the resulting centrifugal force causes the mixed powder 5 to be pressed against the inner wall of the chamber 2, and the resulting shearing force developed when the mixed powder 5 passes through the clearance between the inner 3 and the chamber 2 causes the resin powder 10 and the ceramics powder 11 to be mutually pressed against each other (pressure bonding) to embed a part of the ceramics powder 11 in the surface of the resin powder 10. The mixed powder 5 which has passed through the inner 3 is then scraped off by the scraper 4. The same process is repeatedly conducted. Finally, as shown in Fig. 2, a precursor having a part of the ceramics powder 11 embedded in the resin powder 10 such that the entire surface of the resin powder 10 is covered is obtained. The precursor having such an embedded state can prevent the ceramics powder 11 from being exfoliated off the resin powder 10 during the subsequent calcination or high temperature drying, causing the ceramics powders to be bonded to each other while keeping the covering state good to form a homogeneous thick and rigid porous shell layer made of ceramics powder 11. The amount of the ceramics powder 11 to be embedded in the resin powder 10 is preferably from 50 to 80% of the volume of the powder to assure further the prevention of exfoliation during high temperature drying or sintering and is determined by properly adjusting the treatment time or the clearance between the inner wall of the chamber 2 and the inner 3.

During the aforementioned pressure bonding/ mixing, the chamber 2 may be heated. Heating causes the resin powder 10 to be softened and thus makes it easy for the ceramics powder 11 to be embedded therein. However, since the press action of the inner 3 causes slight generation of heat, the aforementioned pressure bonding/mixing can be conducted at ordinary temperature if there is no necessity of time reduction, etc.

Further, the mixing ratio of the resin powder 10 to the ceramics powder 11 in the mixed powder 5 is not specifically limited, and the resin powder 10 and the ceramics powder 11 may be charged in equal part by weight, for example, though depending on their particle diameter.

The precursor comprising the resin powder 10 and the ceramics powder 11 obtained by the aforementioned pressure bonding/mixing is then subjected to high temperature drying or calcination to cause the resin powder 10 to disappear while bonding the ceramics powders 1 to each other. The high temperature drying is employed in the case where the resin powder 10 is a high hygroscopicity resin and can be carried out, e.g., by irradiating with infrared rays, microwave or the like. On the other hand, the calcination can be employed regardless of whichever the resin powder 10 is a high hygroscopicity resin or other resin. Referring to these treatment conditions, the temperature and time sufficient for complete disappearance of the resin powder 10 are properly predetermined depending on the kind of the resin. Further, in the case of calcination, the ceramics powders 11 can be sintered to each other to form a more rigid porous shell layer. Accordingly, referring to the calcination conditions, the calcination temperature or calcination time is properly predetermined depending on the kind of the ceramics powder 11.

The aforementioned high temperature drying or calcination provides the hollow ceramics particles of the invention, and since the ceramics powder 11 cannot be exfoliated off the resin powder 10 during the high temperature drying or calcination, a homogeneous thick and rigid porous shell layer is formed. In some detail, the slightly divided particles have an average particle diameter of from 10 to 100 µm and the porous shell layer has a thickness as high as from 2 to 60 µm and a strength as high as 5 × 10⁴ MPa or more as calculated in terms of breaking strength as descried in the examples later. Further, the average particle diameter can be adjusted by the particle diameter of the resin powder 10.

In the present invention, the kind of the resin powder 10 and the ceramics powder 11 is not limited, and the resin and ceramics which can be used will be exemplified, respectively.

Examples of the high hygroscopicity resin include hydrolyzate of starch-acrylonitrile graft copolymer, neutralization product of starch-acrylic acid graft polymer, saponification product of ester acrylate-vinyl acetate copolymer, modification product of crosslinked polyvinyl alcohol, crosslinked partly neutralized polyacrylic acid salt, crosslinked isobutylene-maleic anhydride copolymer, crosslinked maleic anhydride graft polyvinyl alcohol, ethylene-vinyl alcohol-based polymer, etc. Further, high absorption resins described in JP-B- 49-43395, JP-B-53-46199, JP-B-55-21041, JP-B-53- 13495, JP-B-55-19243, JP-B-60-25045, JP-A-54-20093, JP-A-55-84304, JP-A-56-91837, JP-A-56-93716, JP-A-56-36504, JP-A-57-21405, JP-A-61-87702, JP-A-61-157513, JP-A-62- 62807, JP-A-2-49002, etc. and processed high hygroscopicity resins described in JP-A-58-180233, JP-A -117222, JP-A-58-42602, etc. may be used.

Further, as resins other than high hygroscopicity resin there may be used polystyrene, polymethyl methacrylate, polypropylene, etc., which are spherical polymers.

On the other hand, as ceramics there are normally used various oxides, nitrides or carbides. The ceramics may be ordinary minerals, and shamot, silica sand, pottery stone, feldspar, mulite, cordierite, apatite, slug, sirasu, fly ash, etc., for example, may be used. Further, cements may be used, and examples of the cements include portland cement, alumina cement, quick hardening high strength cement, expandable cement, acidic phosphate cement, colloidal cement, plaster of Paris, lime silica cement, blast furnace slag cement, sulfated slag cement, keens cement, lime silica cement, silica cement, fly-ash cement, sodium silicate-based cement, potassium silicate-based cement, water glass, oxychloride cement, phosphate cement, etc.

The particle diameter of the hollow ceramics particles is not specifically limited but is preferably from 0.01 to 1 µm.

Further, as the ceramics powder there may be used a plurality of ceramics powders having different formulations in combination, even a plurality of ceramics powders having different particle diameters in combination. In particular, when a plurality of ceramics powders having different particle diameters are used in combination, small diameter particles enter the clearance between large diameter particles during the pressure bonding to the resin powder 10, making it possible to form a denser porous shell layer. In the case where a plurality of ceramics powders having different particle diameters are used in combination, it is appropriate that small diameter particles are used at a weight ratio of from one tenth (10% by weight) to one twentieth (5% by weight) of large diameter particles. (Hollow ceramics particles composite material)

The hollow ceramics particles-containing composite material of the present invention comprises the aforementioned hollow ceramics particles dispersed in a proper matrix.

The matrix can be selected depending on purposes, and a resin or a metal may be properly selected. As the resin there may be used any of thermoplastic resin and thermosetting resin. The metal is not limited, but aluminum, copper, iron, tin, zinc, alloy thereof, etc. are normally used. Further, the ratio of the hollow ceramics particles to the matrix is not limited and can be properly selected depending on purposes, but the percent packing of the hollow ceramics particles is normally from 50 to 80% by volume.

The method of producing the hollow ceramics particles-containing composite material of the present invention is not limited, and the hollow ceramics particles-containing composite material of the present invention can be obtained by filling a mold with hollow ceramics particles, injecting a molten resin or metal into the mold, and then cooling the mold as in the conventional methods. However, in the case where as the matrix there is used a metal, the difference in specific gravity between the two materials causes the hollow ceramics particles to be easily distributed particularly in the vicinity of the level of the molten metal, and the method described in JP-A-2001-348633 to the present applicant is preferably used.

In some detail, a mold comprising a vessel main body which is opened at the top thereof and a cover portion which is provided with an operating hole at the center thereof for drawing a vacuum or supplying compressed air and seals the opening of the vessel main body is used. Firstly, the vessel main body is filled with hollow ceramics particles in a predetermined amount. The top of the vessel main body is covered by a heat-resistant filter which is then fixed. A metal which is a matrix is then placed on the heat-resistant filter. The vessel main body is then covered by the cover portion. Subsequently, the air in the vessel is evacuated through the operating hole to remove unnecessary air. The vessel main body is then heated to melt the metal. Thereafter, an inert gas is introduced into the vessel main body through the operating hole to press the upper surface of the molten metal at a predetermined pressure for a predetermined period of time. In this manner, the molten metal passes through the heat-resistant filter and then enters the clearance between the hollow ceramics particles. Then, by suddenly cooling the vessel main body at a temperature not higher than the solidifying temperature of the metal, a hollow ceramics particles- containing composite material comprising hollow ceramics particles uniformly dispersed therein is obtained.

### (Sliding member)

The aforementioned hollow ceramics particles-containing composite material of the present invention is suitable particularly for sliding member material because the hollow ceramics particles present in the surface portion thereof reduce friction coefficient. Further, since the porous shell layer constituting the hollow ceramics particles has a great thickness and a high strength, the sliding member made of the hollow ceramics particles-containing composite material of the present invention is excellent in durability.

The kind of the sliding member is not limited. For example, a composite material comprising hollow alumina particles, optionally a reinforcing fiber such as metal fiber and ceramics fiber incorporated in an aluminum alloy may be used to prepare an engine cylinder or piston. This composite material can be applied also to brake pad, etc.

### <Example>

The present invention will be further described in the following examples, but the present invention should not be limited thereto.

### [Test-1]

Into Mechanofusion System (AM-15F, produced by HOSOKAWAMICRON CORPORATION) were charged a polymethyl methacrylate powder which had been classified to an average particle diameter of 10 µm and an alumina powder which had been classified to an average particle diameter of 0.2 µm in equal part. Further, into Mechanofusion System was charged a silica powder which had been classified to an average particle diameter of 0.011 µm in a weight proportion of 5% by weight of the alumina powder. The chamber was then rotated at 2,500 rpm for 30 minutes. The precursor thus obtained was put in an electric oven which had been heated to 700°C where the polymethyl methacrylate was then gasified. Subsequently, the precursor was heated to 1, 600°C at a rising rate of about 5°C/min, kept at 1, 600°C for 3 hours, and then cooled to room temperature at a falling rate of 5°C/min.

The reaction product was then observed under electron microscope. As a result, substantially spherical hollow particles (Al₂O₃: 95% by weight - SiO₂: 5% by weight) having a particle diameter of from 10 to 100 µm formed by a porous shell layer having a thickness of from 2 to 51 µm were obtained.

The hollow particles thus obtained were then measured for breaking strength of porous shell layer using a measuring instrument 20 shown in Fig. 3. The measuring instrument 20 shown is arranged such that one hollow particle 30 is mounted on a pedestal 21 in a predetermined position, a hexagonal wrench 22 having a hexagonal plane having a diameter of 2 mm is placed on the hollow particle 30 and the hollow particle 30 is pressed vertically at a load of 2 µm/sec by a push-pull gauge 23 connected to the hexagonal wrench 22. The load at which the hollow particle 30 is destroyed was determined as breaking strength. The results are shown in Fig. 4 as those of the inventive products.

Further, for comparison, Alumina Bubble (produced by SHOWA DENKO K.K.), Fly Ash ("TV09", produced by Microsphere) and Sirasu Balloon ("Tera-balloon A", produced by UBE INDUSTRIES, LTD.) having the following formulations and particle diameters were similarly measured for breaking strength. The results are shown in Fig. 4.

| | | Alumina Bubble | Fly Ash | Sirasu Balloon |
|---|---|---|---|---|
| Particle diameter (µm) | | 400 - 1,600 | 100 - 200 | 10 - 100 |
| Formulation | Al₂O₃ | 99.1 | 54 | 15 |
| | SiO₂ | 0.6 | 36 | 80 |
| | Other components | 0.3 | 10 | 5 |

| | | | | |
|---|---|---|---|---|
| Note) The unit of formulation is % by weight. | | | | |

As can be seen in Fig. 4, the inventive products have a strength as high as 5 × 10⁴ MP or more as calculated in terms of breaking strength whereas other hollow particles have a strength of 4 × 10³ MPa, which is only almost one tenth of that of the inventive products, at most for Fly Ash.

### [Test-2]

The various hollow particles prepared in Test-1 were processed in the following manner to prepare composite materials which were then evaluated for abrasion resistance.

Firstly, the hollow particles were packed in a mold having a cylindrical cavity having a diameter of 10 mm and a depth of 20 mm into which a molten aluminum alloy was then injected to obtain a cylindrical composite material having a diameter of 10 mm and a height of 20 mm. Subsequently, as shown in Fig. 5, the composite material 50 was vertically fixed in an epoxy resin 40, and then dried to prepare a test specimen. Referring to the dimension of the test specimen, the size of the epoxy resin 40 portion is 25 mm x 45 mm x 16 mm as shown. The test specimen is shaped to have a forward end 51 of the composite material 50 protruding from the central part thereof.

The test specimen thus prepared was evaluated for abrasion resistance by the method shown in Fig. 5. In some detail, a polishing wheel 60 having a polishing paper stuck to the periphery thereof was pressed against the forward end 51 of the composite material 50 at a load of 500 gf while being moved back and forth horizontally at a stroke of 30 mm. The weight of the test specimen was measured after 100 times, 500 times and 1,000 times of reciprocal movement to determine the weight loss due to abrasion. The percent weight loss from the initial weight was then determined. The results are shown in Fig. 7.

Further, for comparison, a test specimen made of only aluminum alloy (product free of hollow particles in Fig. 7), too, was similarly subjected to abrasion test.

As can be seen in Fig. 7, the inventive product shows little weight loss due to abrasion and thus can maintain abrasion resistance over an extended period of time.

While the present invention has been described in detail and with reference to specific embodiments thereof, it will be apparent to one skilled in the art that various changes and modifications can be made therein without departing from the spirit and scope thereof.

The present application is based on Japanese Patent filed on March 20, 2003 (Japanese Patent No. 2003-77971) and Japanese Patent filed on March 20, 2003 (Japanese Patent No. 2003-77972) and their contents are hereby incorporated by reference.

### <Industrial Applicability>

As described above, in accordance with the present invention, hollow ceramics particles having ceramics powders firmly bonded to each other, a homogeneous and thick porous shell layer and a strength as high as 5 x 10⁴ MPa or more as calculated in terms of breaking strength can be obtained.

Further, a high strength hollow ceramics particles-containing composite material and a sliding member which can maintain abrasion resistance over an extended period of time can be obtained.

## Claims

1. Hollow ceramics particles having a hollow structure formed by a porous shell layer comprising ceramics powders bonded to each other and having an average particle diameter of from 10 to 100 µm and a breaking strength of 5 × 10⁴ MPa or more.

2. The hollow ceramics particles as described in Claim 1, wherein the average thickness of the aforementioned porous shell layer is from 2 to 60 µm.

3. The hollow ceramics particles as described in Claim 1 or 2, wherein the aforementioned ceramics powder is a mixed powder composed of powders having different particle diameters and/or kinds.

4. A hollow ceramics particles-containing composite material comprising hollow ceramics particles dispersed in a matrix which hollow ceramics particles formed by a porous shell layer comprising ceramics powders bonded to each other, wherein the aforementioned hollow ceramics particles are hollow particles obtained by sintering a precursor comprising the aforementioned ceramics powder covered by a resin powder in such an arrangement that a part of the aforementioned ceramics powder is embedded in the resin

5. The hollow ceramics particles-containing composite material as described in Claim 4, wherein the aforementioned hollow ceramics particles are hollow ceramics particles as described in any one of Claims 1 to 3.

6. The hollow ceramics particles-containing composite material as described in Claim 4 or 5, wherein the aforementioned matrix is a metal.

7. A sliding member made of a hollow ceramics particles-containing composite material as described in any one of Claims 4 to 6.
